Europäisches Patentamt

European Patent Office

Office européen des brevets

(11) Publication number: **0 181 473**
**A1**

(12) **EUROPEAN PATENT APPLICATION**

(21) Application number: 85112268.9

(22) Date of filing: 27.09.85

(51) Int. Cl.⁴: **F 42 B 5/30**
**C 08 K 5/00**

(30) Priority: 31.10.84 IT 2341784

(43) Date of publication of application:
21.05.86 Bulletin 86/21

(84) Designated Contracting States:
DE FR GB

(71) Applicant: Fiocchi Munizioni Spa
Via Santa Barbara 4
I-22053 Lecco Como(IT)

(72) Inventor: Flocchi, Giuseppe
c/o FIOCCHI MUNIZIONI S.p.A. Via S. Barbara, 4
I-22053 Lecco CO(IT)

(74) Representative: Ferri, Antonio et al,
c/o BREVETTI EUROPA S.r.l. Piazza Bernini 6
I-20133 Milano(IT)

(54) Components for cartridge for hunting, shooting purposes and the like of photodegradable synthetic plastic material.

(57) Tubular body of a cartridge case for cartridge for hunting, shooting purposes and the like, constituted by a photodegradable polymeric composition comprising polyethylene of density 0.930 - 0.960, and a photoactivator represented by at least a ferric salt selected among Fe(III)-stearate, Fe(III)-dibutyl-dithiocarbamate, Fe(III)-acetylacetonate and Fe(III)-naphthenate, said photoactivator being in amounts of from 6 to 300 ppm, expressed as Fe relatively to said composition, the same photoactivator allowing the physical-mechanical characteristics of said polyethylene, as well as the apparatus and the operating conditions of the manufacturing process of said tubular body to be kept substantially unaltered. Cartridge for hunting, shooting purposes and the like, with tubular body as described above and moreover provided with ancillary components (base wad and/or launch wad) constituted by photodegradable synthetic plastic material.

EP 0 181 473 A1

"COMPONENTS FOR CARTRIDGE FOR HUNTING, SHOOTING PURPOSES AND THE LIKE OF PHOTODEGRADABLE SYNTHETIC PLASTIC MATE-RIAL"

## Background of the Invention

The present invention relates to components for cartridge for hunting, shooting purposes and the like (in particular, tubular body of the cartridge case) constituted by photodegradable polymeric compositions comprising a synthetic polymer, in particular polyethylene, and a photoactivator.

It is known that a hunting and shooting cartridge (hereinafter called as "cartridge") is constituted by a cartridge case and by a "launch wad", said cartridge case containing the gunpower and said wad (housed inside the cartridge case) containing the lead pellets. The cartridge case is formed in its turn by a metal "base" (incorporating the "initiator") and by a tubular body solidly fastened to the base by means of a "base wad" or "plug". (In the cartridge cases of the "monobloc" type, the metal base is not present).

Said tubular body is made of paper, or of synthetic plastic material, this latter material being presently preferred to paper, due to various known reasons of economic and productive character, and of practical use.

When said tubular body is made of paper, no problems of environmental pollution arise, in that the paper is easily biodegradable under the contact with the ground on to which the cartridge case is generally abandoned after the "shooting" of the cartridge.

When on the contrary the tubular body is constituted by plastic material, such as e.g. and in particular medium-high density polyethylene, environmental problems of various kinds arise, in that, as it is well known, said polyethylene (as in general plastic materials) is not bio degradable.

Similar considerations are true for the launch and base wads.

The problem hence exists of providing a cartridge for hunting, shooting purposes and the like, provided with a cartridge case tubular body and with wads (launch and base wad) made of photodegradable synthetic plastic material. In particular, the problem exists of providing a cartridge case, whose tubular body is constituted by pho todegradable medium-high density polyethylene, undergoing biodegradation after having been photodegraded.

It is known on the other side that the problem of ren dering biodegradable some types of plastic materials in connection with their "throw-away use" has been dealt with and solved in other technical fields, in particular in the field of LDPE (low density polyethylene) for agri cultural use ( as an instance, for the "stubble mulching" of market-garden and orchard cultivations) and in some types of non-returnable packages, such as e.g., wraps for 2-6 cans, or bottles for picnic drinks.

In the case of LDPE (as well as for other polymers), in order to have a biodegradable product, inside the same LDPE a "photoinitiator" is incorporated, i.e., a substance capable of absorbing from solar spectrum radiations causing molecular breakdowns in the polymer, so that the same polymer, photodegraded to a low molecular weight, may then become susceptible to biodegradation under the contact with the ground bacteria.

As the photoinitiator agents (or "photoactivator" agents or however agents suitable to facilitate the photo degradation), several substances have been proposed.

As an example, Friedman et al. (J. Appl. Polym. Sci., 20, N° 4, Apr. 1976, p. 911 and p. 921; and N° 2, Feb. 1976, p. 463), to the purpose of achieving LDPE biodegradable films, suggest the use of halo-carbonyls, sulpho-halo-alkyls, aryl-methyl-halogenides, phenyl-halo-methyl-ketones, halo-alkenes, and N-bromosuccinimide.

U.K. Patent 1,519,529 and the corresponding U.S. Patent 4,028,480 teach how to render photodegradable some polymeric compositions, in particular films of polyethylene with density 0.92 (hence, LDPE), by incorporating into the same polyethylene at least a ferrous salt selected among Fe(II)-dodecylsuccinate, Fe(II)-6-O-palmitoyl-1-ascorbate, , Fe(II)-monolauryl-ethanolamido-sulphosuccinate, Fe(II)-monostearyl-sulphosuccinate, Fe(II)-N-palmitoyl-glutamate, Fe(II)-N-lauroyl-aspartate, Fe(II)-2-sulphopalmitate, and Fe(II)-O-palmitoylgluconate.

At last, U.K. Patent 1,486,164 teaches how to prepare photodegradable films of LDPE for application in the agricultural field, by incorporating di-furfurylidene-cyclo-alkenone.in the same polyethylene.

Besides by the above methods, LDPE can be rendered photodegradable by introducing carbonyl groups inside the ethylene chain, and i.e. by preparing ethylene-carbon monoxide copolymers, as W.P. Bremer (Polym. Plast. Technol. Eng., 18, N° 2, 1982, p. 137-148), and V. Pozzi et al (J. Appl. Polym. Sci., 19, N°4, Apr. 1975, p. 923) teach.

It is evident from the above that the problem has not been faced yet, and least of all solved, of the availability of a cartridge case, whose tubular body is made of photodegradable medium-high density polyethylene, said problem showing several types of difficulties, such as those, in particular, that the physical-mechanical characteristics of the polyethylene intended for forming the tubular body of the cartridge case should not be altered, and that alterations of the equipment and of the operating conditions of the manufacturing process of said tubular body should not be caused.

## Disclosure of the Invention

Purpose of the present invention is hence that of providing a cartridge case for cartridge for hunting, shooting and the like, whose tubular body is constituted by photodegradablle plastic  material, in particular photodegradable medium-high density polyethylene, by incorporating in the same polyethylene a photoactivator  agent of the degradation reaction of the polymeric chain of said polyethylene, so that this latter, after having been photodegraded, results then biodegradable, said photoactivator agent being of such a nature as not to induce significant alterations in the physical-mechanical characteristics of said polyethylene, and not to require alterations to the equipment and to the operating conditions of the manufacturing process of said tubular body.

Another purpose of the invention is that of providing a hunting- and shooting-cartridge which - in addition to said tubular body of the cartridge case - has also the usual ancillary components (base wad and/or launch wad) made of photodegradable plastic material.

These and further purposes which may be evident from the following disclosure are achieved, according to the present invention, by means of a cartridge case having its tubular body constituted by a photodegradable polymeric composition comprising polyethylene of density 0.930 - 0.960 (preferably 0.945 - 0.950) and a photoactivator constituted by at least a ferric salt, selected among Fe(III)-stearate, Fe(III)-di-butyl-dithiocarbamate, Fe(III)-acetylacetonate and Fe(III)-naphthenate, said photoactivator being in amounts of from 6 to 300 ppm (parts per million by weight), expressed as Fe relatively to the said composition, the same photoactivator making it possible both the physical-mechanical characteristics of said polyethylene, and the apparatus and the operating conditions of the manufacturing process of said tubular body to be maintained substantially unaltered.

The preferred amount of said activator to be incorporated in said polyethylene is preferably of 12 - 125 ppm (as expressed as Fe).

Always according to the invention, the ancillary components of the cartridge, having functions of retention and tightening (base wad or plug) and of containment (launch wad) are constituted by plastic compositions based on photodegradable medium-high density polyethylene as described above, or also based on photodegradable LDPE or on any other suitable photodegradable plastic ma terials.

The advantages of the invention are implicit in what already above said, as the same invention provides, in a simple and cheap way, a cartridge case with tubular body of photodegradable medium-high density polyethylene, said tubular body resulting - after the photodegradation - easily biodegradable by the ground on which the cartridge case may be left after its end use (cartridge shooting), whilst, on the other hand, the same cartridge case, as considered as a whole, does not suffer alterations during its storage time before said end use. The same is true for the base wad and the launch wad.

The following examples, given only to exemplifying and not limitative purposes of the invention shall serve to the purpose of better illustrating the invention itself.

### Example 1

By using an extruder and the related conventional complementary pieces of equipment of known type, as well as - as the starting plastic material - polyethylene of density of 0.945, the six tube types indicated hereinunder were extruded, which, after the stretching and blowing operations (accomplished by means of conventional known methods), are of 20 mm in diameter, and of 0.6 mm in thickness:

- colourless tubes containing respectively 0%, 0.05% and 0.1% of Fe(III)-stearate [Fe(III)-STEA];
- red-coloured tubes containing respectively 0%, 0.05% and 0.1% of Fe(III)-stearate.

(The said amounts of 0.05% and 0.1% of Fe(III)-stearate correspond to 31 and 62 ppm of Fe respectively).

From the said six tube types lenghtes 75 mm long were obtained, which were then used for the photodegradation tests described hereinunder, and precisely:

(a) Weathering test, with indirect solar radiations (specimens shielded -at distance - from the direct radiation): to this test colourless tube lengthes respectively containing 0% and 0.1% of Fe(III)-STEA were submitted.

The test results (as reported in Table 1) are expressed as "index-values" resulting from the following evaluation method:

- after the various exposure times, from each tube length 3 specimens of 25 mm in length are cut, each of said specimens is then deformed (by an outer pressure along one of its generatrices, by means of a suitable inner shaped mandrel and outer punch with prismatic relief of 90°), so as to obtain two longitudinal bendings along which the material results in a tensional state. The specimens so deformed are immersed over 18 hours (together with the related mandrel-punch assemblies, which keep them deformed, the same being solidy linked to each other by means of suitable screws) in distilled water containing 5% by weight of a surfactant agent (ARCOPAL 100), and constantly maintained at 65 + 1°C.

After such a stress cracking time, the specimens are removed from the related mandrel-punch assemblies, then washed in running water and dried, and then visually "evaluated" as follows:

- the crackings produced in correspondence of the said two longitudinal bendings are observed and counted, to each cracking a (subjective) value of from 0 to 100 being assigned, as a function of the cracking type, and precisely:

- cracking from side to side (very bad) = 100
- long deep cracking (bad)            = 80
- short deep cracking (poor)          = 60
- long superficial cracking (medium)  = 40
- short superficial cracking (good)   = 20
- no cracking (very good)             = 0

In Table 1 (and subsequently in Table 2 too), with "max" the worst "index-value" observed is indicated, whilst with $\overline{M}$ the average value is indicated, which is obtained by adding up all the "index-values" assigned to each cracking observed, and dividing the sum obtained by 6 (3 specimens × 2 bending/observation zones = 6).

(b) weathering test, with direct radiation (specimens oriented southwards, with 45° inclination): to this test both colourless specimens (with Fe-STEA in amounts of 0% and 0.05% respectively), and red-coloured specimens (with Fe-STEA contents of 0%, 0.05% and 0.1% respectively) were submitted. The results, evaluated as previously described under (a) are reported in Table 1.

(c) Test of exposure to solar lamp: in this test, of known type, a 300 W OSRAM Ultravitalux lamp was used, placing the specimens at a distance of 17.5 cm from the light source. The temperature measured in the region of the specimens resulted of about 55°C.

After the various exposure times, the specimens were evaluated, both by the method as described under previous point (a) (the results are reported in Table 2), and by carrying out tests of elongation at break, with testing rate of 50 mm/minute, in an environment maintained at 23° C with relative humidity of 50%.

The values obtained are reported in Table 3, each value representing the average of five measurements (on colourless specimens).

Clearly, the greater the photodegradation, the lower the elongation at break.

(d) Comparison test: all the six tube types, both colourless and red, indicated above, have been stored in a closed space (within boxes) and hence protected from the atmospheric agents over a 1 year time period: after that time, no specimen showed even the smallest cracking.

TABLE 1 (Tests of exposure to weathering agents)

INDEX-VALUES RELATING TO THE MAGNITUDE OF CRACKING

| Exposure time (days) | Colourless specimens, to indirect radiation | | | | Exposure to direct radiation | | | | | | | | | |
|---|---|---|---|---|---|---|---|---|---|---|---|---|---|---|
| | | | | | Colourless specimens | | | | Red Specimens | | | | | |
| | Fe-STEA 0% | | Fe-STEA 0.1% | | Fe-STEA 0% | | Fe-STEA 0.05% | | Fe-STEA 0% | | Fe-STEA 0.05% | | Fe-STEA 0.1% | |
| | max | $\overline{M}$ | max | $\overline{M}$ | max | $\overline{M}$ | max | $\overline{M}$ | max | $\overline{M}$ | max | $\overline{M}$ | max | $\overline{M}$ |
| 0 | 0 | 0 | 0 | 0 | 0 | 0 | 0 | 0 | 0 | 0 | 0 | 0 | 0 | 0 |
| 15 | 0 | 0 | 0 | 0 | 0 | 0 | 100 | 90 | 0 | 0 | 40 | 7 | 80 | 27 |
| 30 | 0 | 0 | 0 | 0 | 80 | 43 | 100 | 100 | 20 | 3 | 80 | 37 | 80 | 80 |
| 45 | 0 | 0 | 0 | 0 | 100 | 93 | | | 20 | 7 | 80 | 80 | 100 | 80 |
| 60 | 0 | 0 | 0 | 0 | 100 | 100 | | | 80 | 30 | 100 | 100 | 100 | 100 |
| 75 | 0 | 0 | 100 | 33 | | | | | 100 | 30 | | | | |
| 90 | 0 | 0 | 100 | 67 | | | | | | | | | | |
| 105 | 0 | 0 | 100 | 80 | | | | | | | | | | |
| 120 | 80 | 13 | 100 | 100 | | | | | | | | | | |
| 135 | 100 | 33 | | | | | | | | | | | | |
| 150 | 100 | 87 | | | | | | | | | | | | |
| 170 | 100 | 100 | | | | | | | | | | | | |

## TABLE 2 (Tests of exposure to the solar lamp)

### INDEX-VALUES RELATING TO THE MAGNITUDE OF CRACKING

| Exposure time (days) | Colourless specimens | | | | Red specimens | | | | | |
|---|---|---|---|---|---|---|---|---|---|---|
| | Fe-STEA 0% | | Fe-STEA 0.05% | | Fe-STEA 0% | | Fe-STEA 0.05% | | Fe-STEA 0.1% | |
| | max | $\overline{M}$ | max | $\overline{M}$ | max | $\overline{M}$ | max | $\overline{M}$ | max | $\overline{M}$ |
| 0 | 0 | 0 | 0 | 0 | 0 | 0 | 0 | 0 | 0 | 0 |
| 3 | 100 | 23 | 100 | 100 | 40 | 10 | 80 | 40 | 80 | 53 |
| 6 | 100 | 100 | | | 80 | 33 | 100 | 83 | 100 | 100 |
| 9 | | | | | 100 | 47 | 100 | 100 | | |
| 12 | | | | | 100 | 57 | | | | |
| 15 | | | | | 100 | 100 | | | | |

## TABLE 3

### (Tests of exposure to the solar lamp)
### VARIATIONS OF ELONGATION AT BREAK

| Exposure time (days) | Elongation at break (%) | | | |
|---|---|---|---|---|
| | Longitudinal | | Transversal | |
| | Amount of Fe(III)-stearate, % by weight | | | |
| | 0% | 0.1% | 0% | 0.1% |
| 0 | 70% | 71% | 380% | 370% |
| 3 | 75% | 65% | 430% | 20-70% |
| 6 | 75% | 8% | 20-480% | 6% |
| 10 | 35% | 6% | 10% | (*) |
| 16 | 4% | 4% | 4% | (*) |
| (*) The test cannot be carried out due to the brittleness of the specimens. | | | | |

### Example 2

The Example 1 has been repeated (limitedly to the test of exposure to the solar lamp, with the determination of the variations of elongation at break), preparing and using different types of specimens (tube lengthes) constituted by compositions comprising Fe(III)-stearate (in the amounts of 0.05% and 0.1% as in Example 1) and polyethylene having densities different to those of said Example 1, and precisely of 0.930 and 0.960. Results practically equal to those obtained in Example 1 with polyethylene of density 0.945 (Fe-STEA 0.05% and 0.1%) were obtained.

### Example 3

Example 1 was repeated (limitedly to the tests of exposure to the solar lamp, with the determination of the variations of elongation at break), preparing and using different types of tube lengthes, all constituted by polyethylene of density 0.945 respectively containing:

- Fe(III)-di-butyl-ditiocarbamate,
- Fe(III)-aceylacetonate, and
- Fe(III)-naphthenate,

the said Fe(III) salts being all present in amounts corresponding to 31 ppm of iron.

Results practically equivalent to those as obtained in Example 1 with the specimens constituted by the same polyethylene and containing Fe(III)-stearate in the amount of 0.05% (corresponding to 31 ppm of iron) were obtained.

### Example 4

Following the procedures as of Example 1, and using always polythene with density 0.945, tube lengthes of black colour (black specimens) were prepared, and then submitted both to the test of exposure to the weathering agents (with direct radiation) and to the test of exposure to the solar lamp, according to the examination criteria as already described in the same Example 1.

The results obtained are shown respectively in Table 4 and in Table 5.

The comparison test (analogous to that as under (d) of Example 1) did not show crackings on the specimens.

### Example 5

Three types of hunting cartridges of conventional shape were prepared, using polyethylene of density 0.945 (colourless for the relevant cartridge case tubular body.

### TABLE 4

Tests of exposure to the weathering agents (direct radiation) carried out on black specimens. Index-values max and $\overline{M}$ related to the magnitude of the crackings.

| Exposure time (days) | Content of Fe-STEA | | | | | |
|---|---|---|---|---|---|---|
| | 0% | | 0.05% | | 0.1% | |
| | max | $\overline{M}$ | max | $\overline{M}$ | max | $\overline{M}$ |
| 0 | 0 | 0 | 0 | 0 | 0 | 0 |
| 13 | 0 | 0 | 0 | 0 | 100 | 17 |
| 30 | 0 | 0 | 80 | 30 | 100 | 77 |
| 49 | 40 | 13 | 100 | 100 | 100 | 100 |
| 60 | 80 | 27 | | | | |
| 75 | 40 | 13 | | | | |
| 90 | 40 | 40 | | | | |
| 105 | 80 | 46 | | | | |
| 128 | 100 | 100 | | | | |

The three types said were different from each other as for the Fe-STEA content in polyethylene (respectively of 0%, 0.05%, and 0.1%).

Said cartridges were submitted to a cycle of "alternate conditioning", and namely kept

- for 24 hours at +45°C

- for 24 hours at -20°C

- for 24 hours at +45°C

After such a "cycle", the same cartridges were used in shooting tests (shotgun "Beretta"), from which it was possible it to detect for the cartridges of polyethylene containing Fe-STEA a performance without anomalies as compared to the analogous comparison cartridges of polyethylene without Fe-STEA.

Analogous favourable results were then obtained by carrying out the same tests on cartridges having black-co

loured cartridge case.

<div align="center">

**TABLE 5**
</div>

Tests of exposure to the solar lamp, carried out on black specimens. Index values max and $\overline{M}$ relating to the magnitude of the crackings.

| Exposure time (days) | Content of Fe-STEA | | | | | |
|---|---|---|---|---|---|---|
| | 0% | | 0.05% | | 0.1% | |
| | max | $\overline{M}$ | max | $\overline{M}$ | max | $\overline{M}$ |
| 0 | 0 | 0 | 0 | 0 | 0 | 0 |
| 2 | 0 | 0 | 80 | 13 | 100 | 50 |
| 4 | 80 | 13 | 100 | 40 | 80 | 27 |
| 6 | 20 | 3 | 100 | 100 | 100 | 100 |
| 8 | 100 | 53 | | | | |
| 10 | 100 | 47 | | | | |
| 12 | 100 | 47 | | | | |
| 14 | 100 | 33 | | | | |

From the exmaples described above, the advantages of the invention, according to the purposes thereof, result clearly evident.

"COMPONENTS FOR CARTRIDGE FOR HUNTING, SHOOTING PURPOSES
AND THE LIKE OF PHOTODEGRADABLE SYNTHETIC PLASTIC MATE-
RIAL"

C l a i m s

1. Tubular body of cartridge case for cartridge for
hunting, shooting and the like, of plastic material, char
acterized in that it is constituted by a photodegradable
polymeric composition, comprising polyethylene of density
0.930 - 0.960, and a photoactivator represented by at
least one ferric salt selected among Fe(III)-stearate,
Fe(III)-dibutyl-dithiocarbamate, Fe(III)-acetylacetonate
and Fe(III)-naphthenate, said photoactivator being in amounts of 6 - 300 ppm, expressed as Fe relatively to said
composition, the same photoactivator allowing both the
physical-mechanical characteristics of said polyethylene
and the equipment and the operating conditions of the ma
nufacturing process of said tubular body to be maintained substantially unchanged.

2. Tubular body of cartridge case according to claim
1, wherein said polymeric composition comprises said pho
toactivator in amounts of from 12 to 125 ppm, expressed
as Fe relatively to the same composition.

3. Tubular body of cartridge case according to claim
1, wherein said polyethylene has a density of 0.945-0.950.

4. Photodegradable polymeric composition characterized in that it comprises polyethylene of density 0.930 -
- 0.960, and at least one photoactivator constituted by a
ferric salt selected among Fe(III)-stearate, Fe(III)-di-
butyl-dithiocarbamate, Fe(III)-acetylacetonate, and
Fe(III)-naphthenate, said photoactivator being in amounts
of from 6 to 300 ppm, expressed as Fe relatively to said composition.

5. Photodegradable polymeric composition according to claim 4, wherein said polymeric composition comprises said photoactivator in amounts of 12 - 125 ppm, expressed as Fe relatively to the same composition.

6. Photodegradable polymeric composition according to claim 4, wherein the polyethylene has a density of from 0.945 to 0.950.

7. Cartridge for hunting, shooting purposes and the like, characterized in that it has the tubular body of its cartridge case constituted by a photodegradable polymeric composition, according to one or more of claims from 4 to 6, and the ancillary components, such as base wad and/or launch wad, constituted by photodegradable plastic material.

8. Cartridge for hunting, shooting purposes and the like, according to claim 7, wherein at least one of said ancillary components is constituted by a polymeric composition according to one or more of claims from 4 to 6.

## DOCUMENTS CONSIDERED TO BE RELEVANT

| Category | Citation of document with indication. where appropriate, of relevant passages | Relevant to claim | CLASSIFICATION OF THE APPLICATION (Int. Cl.4) |
|---|---|---|---|
| X | GB-A-1 401 418 (IMPERIAL CHEMICAL) <br> * Page 1, lines 11-47,60-71; page 2, lines 10-28 * | 1-8 | F 42 B 5/30 <br> C 08 K 5/00 |
| A | GB-A- 926 196 (DISTILLERS CO.) <br><br> * Page 3, lines 102-115 * | 1,3,4, 6 | |
| Y | DE-A-2 317 529 (DYNAMIT NOBEL) <br> * Page 1, paragraph 1; page 3, paragraph 2; page 4, paragraphs 2,3; page 5, paragraphs 1-3 * | 1-8 | |
| Y | DE-A-2 136 704 (SCOTT) <br> * Page 5, paragraphs 2,3; page 6, paragraph 3; page 8, paragraph 2; page 26, example 9; page 31, example 13; page 38; page 39, example 21 * | 1-8 | TECHNICAL FIELDS SEARCHED (Int. Cl.4) |
| Y | CHEMICAL ABSTRACTS, vol. 81, no. 10, 1974, page 44, no. 50617z, Columbus, Ohio, US; & JP - A - 74 10 946 (NISSEKI PLASTIC CHEMICAL CO., LTD.) 30-01-1974 | 1-8 | F 42 B <br> C 08 K |

The present search report has been drawn up for all claims

| Place of search | Date of completion of the search | Examiner |
|---|---|---|
| THE HAGUE | 30-01-1986 | VAN DER PLAS J.M. |